# EUROPEAN PATENT SPECIFICATION

(11) **EP 0 773 442 B1**
(45) Date of publication and mention of the grant of the patent: **16.02.2000**
(21) Application number: 96117786.2
(22) Date of filing: 06.11.1996
(51) Int. Cl.: G01N 35/10, B01L 3/02, F16J 15/00

(54) **Piston with lubricating seal**
Kolben mit schmierender Dichtung
Piston avec garniture d'étanchéité lubrifiante

(30) Priority: 08.11.1995 JP 29008195
(43) Date of publication of application: 14.05.1997
(73) Proprietor: Tosoh Corporation, Shinnanyo-shi, Yamaguchi-ken, 746-8501 (JP)
(72) Inventor: Uehara, Masafumi, Shinnanyo-shi, Yamaguchi-ken (JP)
(74) Representative: Tiedtke, Harro, Dipl.-Ing.

(56) References cited:
- US-A- 2 168 818
- US-A- 5 146 793
- US-A- 5 169 160
- US-A- 5 353 691

## Description

The present invention relates to a fluid sucking and discharging device according to the preamble of claim 1 and which is used for supplying e.g. a liquid sample or a buffer solution to a biochemical or immunological analyzer, a separating/analyzing instrument such as a column, and the like. In particular, the present invention relates to a fluid sucking and discharging device which produces a depressurized state and a pressurized state in a cylinder to suck a fluid in and discharge the fluid out of the cylinder.

Normal pumps including injectors are a device which adjust a pressure in a cylinder constituting a main body to suck and discharge a fluid such as a liquid and a gas into and out of the cylinder.

The adjustment of the pressure (pressurization and depressurization) in the cylinder is carried out by moving a piston which has a sealing portion intimately contacted with an inner surface of the cylinder. It is frequent that the sealing portion of the piston which intimately contacts with the inner surface of the cylinder is worn due to sliding movement by long-run jobs to hurt gastightness between the sealing portion and the cylinder.

In particular, in the case wherein a liquid including a crystalline precipitable material at a high concentration is sucked and discharged by such devices, when the solution leaks from a minute gap at the intimately contacted portion between the inner surface of the cylinder and the sealing portion of the piston to a location in the cylinder where the liquid to be treated should not exist, and the leaked portion of the solution is dried to deposit crystalline pieces on the inner surface of the cylinder, the sliding movement of the piston causes these pieces to be ground between the inner surface of the cylinder and the sealing portion of the piston in a solid state to make the wear and damage to the inner surface of the cylinder or the sealing portion of the piston much worse, having adverse effect on the service life of the devices.

When the liquid is sucked and discharge, it is normal that one side of the sealing portion contacts with the liquid while the other side of the sealing portion does not contact with the liquid. Since the side of the sealing portion which does not contact with the liquid dries to significantly lower abrasion resistance. When a gas is sucked and discharged, the sealing portion is constantly put in a dried state to more remarkably lower abrasion resistance. A decrease in abrasion resistance lowers the gastightness between the inner surface of the cylinder and the piston, thereby having adverse effect on the service life of the devices.

Furthermore, from the US-A-5169160 a device is already known in which a piston is reciprocable arranged to produce a pressurized and depressurized state in a cylinder and thus able to suck and discharge a fluid. The piston has two sealing portions which contact the inner surface at points which are displaced from one another in an axial direction. There are provided piston seals which comprise grease cavities, respectively, which are opened to a supporting surface. The supporting surface is part of the piston. Thus, the grease cavity only serves to grease the respective part of the cylinder wall opposed to the piston seal.

From the US-A-5353691 a compressible seal member is known which comprises two separate spaces for storing liquid or a lubricative viscous material. There are provided two groove portions which are axially spaced along the outer periphery of the seal member. These groove portions are completely filled with a lubricant.

It is the object of the present invention, to provide a fluid sucking and discharging device being capable of minimizing the operation at the sealing portion of a piston reciprocating within a cylinder bore.

This object is achieved by a fluid sucking and discharging device according to the new claim 1. Further advantageous embodiments of the present invention are the subject-matter according to the dependent claims.

It is an object of the present invention to provide a fluid sucking and discharging device capable of minimizing the abrasion at the sealing portion of the piston stated earlier, and of having a long service life.

The inventor has made tremendous research efforts about a fluid sucking and discharging device which is suitable to suck and discharge a fluid, in particular a liquid including precipitable pieces at a high concentration. The research efforts have shown that the sealing portion of a piston can be provided with an unique structure to obtain a fluid sucking and discharging device attaining the object. Thus the present invention has been completed.

Specifically, the present invention provides a fluid sucking and discharging device wherein a piston moves to produce a depressurized state and a pressurized state in a cylinder to suck and discharge a fluid, comprising the piston having a plurality of sealing portions which contact with an inner surface of the cylinder, the sealing portions being arranged so as to be layered; the sealing portions having a gap formed between opposed sides thereof; and the gap having at least one of a liquid and a lubricative viscous material sealed therein.

In accordance with the present invention, abrasion due to the sliding movement between the cylinder and the sealing portions of the piston can be minimized. Even if a solution including a precipitable solute at a high concentration is dealt with, the device can withstand long-run jobs.

The invention will now be described by way of example and which reference to the accompanying drawing in which:
Figure 1 is a longitudinal cross-sectional view illustrating an embodiment of a fluid sucking and discharging device; and
Figure 2 is a cross-sectional view taken along the chain line of Figure 1.

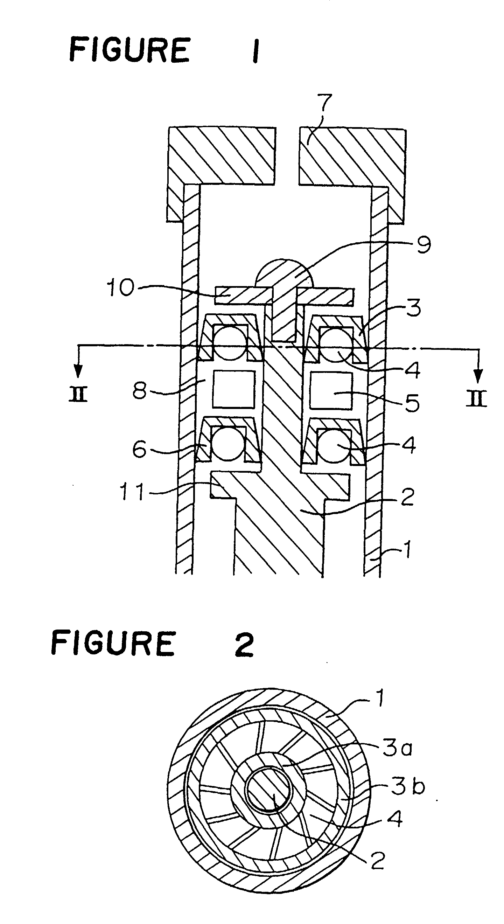

In Figure 1, there is shown an embodiment of a fluid sucking and discharging device according to the present invention. The embodiment is shown as a cross-sectional view which is taken at a plane including the axis of a cylinder of the device. In Figure 2, the device is shown as a cross-sectional view which is taken along the chain line of Figure 1.

In these Figures, reference numeral 1 designates the cylinder which is made of e.g. glass or a rigid synthetic resin. The cylinder normally has a cylindrical shape. Reference numeral 2 designates a piston rod which reciprocates in the cylinder. Reference numerals 3 and 6 are a first sealing portion and a second sealing portion of the piston, which reciprocate in the cylinder 1 in conjunction with the reciprocation of the piston rod 2 because of a stopper 10 secured at a leading end of the piston rod 2 by a screw 9 and a stopper 11 formed on the piston rod. In the example shown in Figure 1, the first sealing portion 3 and the second sealing portion 6 are not simply layered, but both sealing portions are layered so as to interpose an annular spacer 5 therebetween. By interposing the spacer as the example, a gap between the first sealing portion 3 and the second sealing portion 6 can be ensured to decrease a possibility that both sealing portions are damaged due to collision during reciprocations to lower gastightness between the sealing portions and the inner surface of the cylinder.

The first sealing portion 3 and the second sealing portion 6 have outer peripheral portions contacted with the inner surface of the cylinder. The sealing portions are normally made of a high functional polymer such as polytetrafluoroethylene and polyethylene.

In accordance with the present invention, the two sealing portions or more may be carried on the piston. The invention is characterized in that the gap defined between at least a pair of opposed sealing portions has a liquid or a lubricative viscous material sealed therein. Specifically, in the structure shown in Figure 1, the total number of the arranged sealing portions is two, and the location where the liquid or the viscous material is sealed is the gap 8 defined by the first sealing portion 3 and the second sealing portion 6.

The width of the gap (the distance between both sealing portions) varies depending on the diameter of the cylinder, and the kind and the volume of a fluid to be sucked and discharged. The width is normally around 20-50% of the diameter of the cylinder. Although there is no limitation to the volume of the liquid or the viscous material to be sealed therein, the volume is determined to such a degree that the sealing portions have at least the entire circumference gotten wet.

With regard to the liquid and so on to be sealed between both sealing portions, when e.g. a solution including a solute at a relatively high concentration is sucked and discharged by the device, a liquid capable of melting the solute, e.g. water or an organic solvent such as alcohol, is used. When a gas such as air and oxygen is sucked and discharged, it is preferable that a lubricant such as a viscous lubricant (grease) with metallic soap mixed therein is used in terms of a smooth reciprocation of the piston.

Such a structure can make the sliding movement between the inner surface of the cylinder and the sealing portions of the piston smooth. In particular, in the case of sucking and discharging a solution including a readily precipitable solute, even if the solute precipitates on the inner surface of the cylinder due to e.g. a pause in operation, or the solute precipitates on the inner surface of the cylinder at locations where the piston reverses, the precipitate is washed off by the liquid sealed between the sealing portions, lowering the danger of damaging the inner surface of the cylinder, the sealing portions and so on. When a gas is sucked and discharged, the sealing portions can get wet all the times to prevent the sealing portions from deteriorating. Naturally, it is preferable that the liquid or the like which has been sealed between the sealing portions is exchanged after the sucking and discharging device has been used for a certain period of time.

A preferable mode of the sealing portions used in the present invention is that helical coils (springs) 4 made of e.g. stainless steel are embedded and enclosed in the respective sealing portions. The sealing portions are pressed against the inner surface of the cylinder by the elastic force of the springs, which is preferable from the viewpoint that the gastightness at the sealing portions can be held. In particular, when the respective sealing portions are formed in a U-character shape in section to have a groove therein, and the springs are embedded in the respective grooves, it is possible to get the sealing portions into contact with the inner surface of the cylinder in higher gastight relation by changing the opening direction of the grooves in the cylinder depending on e.g. an estimated pressure on sucking or discharging. For example, in the case shown in Figures 1 and 2, a negative pressure is produced in the device by downward movement of the piston to suck a fluid from a sucking and discharge port 7. At the same time, the first sealing portion and the second sealing portion 6 have side portions expanded to improve the gastight relation between the outer periphery of the sealing portions and the inner surface of the cylinder (for example at a portion 3b of the first sealing portion 3 as shown in Figure 2) and between the inner periphery of the sealing portions and the piston rod (for example at a portion 3a of the first sealing portion 3 in Figure 2).

### EXAMPLE:

Fluid sucking and discharging tests were carried out on the device constructed as shown in Figures 1 and 2. A glass cylinder having an inner diameter of about 7 mm was used as the cylinder of the device. Two polyethylene disks which were respectively formed in a U-character cross-sectional shape so as to have respective circumferential sides with a thickness of about 2 mm, and which had the respective circumferential sides closely contacted with the cylinder were used as the first sealing portion and the second sealing portion of the device and were layered in the cylinder. A steel spring having a diameter of about 1 mm was put in the groove formed in each sealing portion, and the side of each sealing portion which had the groove formed therein was directed to a direction opposite to the fluid sucking and discharging port of the glass cylinder. The gap between both sealing portions had water sealed therein in sufficient quantity to fill about a half of the volume of the gap.

The results which were obtained by sucking and discharging a saturated potassium chloride solution showed that no sucking and discharging performance lowered even after the piston was subjected to 30000 times of reciprocations and more.

The experiments wherein grease was sealed in the gap between the sealing portions having the same structure, and wherein sucking and discharging an oxygen gas was carried out showed similar results.

For comparison, sucking and discharging a saturated potassium chloride solution was carried out by a device which used the same glass cylinder, and which used a single sealing portion of a polyethylene disk with a rubber ring put therein instead of a spring. The experimental results showed that 2000 times of reciprocations deteriorated the gastightness of the sealing portion, and that the sucking and discharging performance significantly lowered. The experimental results which were carried out on the same device with respect to an oxygen gas showed that about 2000 times of reciprocations deteriorated the airtightness of the sealing portion as well.

## Claims

1. A fluid sucking and discharging device wherein a piston (2) moves to produce a depressurized state and a pressurized state in a cylinder (1) to suck a fluid and discharge the fluid, wherein said piston (2) has at least two sealing portions (3, 6) which contact with an inner surface of the cylinder, the sealing portions being displaced from one another in an axial direction,
characterized in that
said sealing portions are accommodated in a common space formed in said piston in an opposed manner and in that a spacer (5) is interposed between said first sealing portion (3) and said second sealing portion (6), wherein said space (8) has at least one of a liquid and a lubricative viscous material sealed therein.

2. A device according to claim 1,
characterized in that
said sealing portions (3, 6) of said piston (2) have helical springs (4, 4) enclosed therein, respectively.

3. A device according to claim 1 or 2,
characterized in that
said space (8) which is formed between the opposed sides of said sealing portions (3, 6) has a lubricant sealed therein as the lubricative viscous material.

4. A fluid sucking and discharging device according to claim 1, characterized in that each sealing portion (3, 6) has a groove formed therein which is opened to a direction opposite to a fluid sucking and discharging port of said cylinder (1).

5. A fluid sucking and discharging device according to claim 1, characterized in that said sealing portions (3, 6) are of ring-disc shape and have a U-character cross-sectional shape.

6. A fluid sucking and discharging device according to claim 5, characterized in that said U-character cross-sectional shape of said sealing portions form respective grooves in which springs are embedded.

7. A fluid sucking and discharging device according to any of claims 5 to 6, characterized in that said grooves formed in said sealing portions (3, 6) are opened to a direction opposite to a fluid sucking and discharging direction.

8. A fluid sucking and discharging device according to any of the preceding claims, characterized in that the width of said space (8) is around 20-50% of the diameter of said cylinder (1) .

9. A fluid sucking and discharging device according to any of the preceding claims, characterized in that said sealing portions (3, 6) reciprocate in conjunction with the reciprocation of said piston rod (2) due to a stopper (10) secured at a leading end of said piston rod (2).

## Patentansprüche

1. Fluidansaug- und Ausstoßvorrichtung, in der ein Kolben (2) bewegt wird, um einen dekomprimierten Zustand und eine komprimierten Zustand in einem Zylinder (1) zu erzeugen, um ein Fluid anzusaugen und das Fluid auszustoßen, wobei der Kolben (2) zumindest zwei Dichtungsabschnitte (3, 6) hat, die mit einer inneren Oberfläche des Zylinders in Kontakt stehen, wobei die Dichtungsabschnitte in einer axialen Richtung voneinander versetzt angeordnet sind, dadurch gekennzeichnet, daß die Dichtungsabschnitte in einem gemeinsamen Raum, der in dem Kolben ausgebildet ist, in einer gegenüberliegenden Art und Weise untergebracht sind, und daß ein Abstandhalter (5) zwischen dem ersten Dichtungsabschnitt (3) und dem zweiten Dichtungsabschnitt (6) eingelegt ist, wobei der Raum (8) mindestens ein flüssiges und/oder ein schmierfähiges viskoses Material abgedichtet darin enthält.

2. Vorrichtung gemäß Anspruch 1, dadurch gekennzeichnet, daß die Dichtungsabschnitte (3, 6) des Kolbens (2) jeweils schraubenförmige Federn (4, 4) darin eingeschlossen haben.

3. Vorrichtung gemäß Anspruch 1 oder 2, dadurch gekennzeichnet, daß der Raum (8), der zwischen den gegenüberliegenden Seiten der Dichtungsabschnitte (3, 6) ausgebildet ist, ein Schmiermittel darin dicht als schmierfähiges viskoses Material enthält.

4. Fluidansaug- und Ausstoßvorrichtung gemäß Anspruch 1, dadurch gekennzeichnet, daß jeder Dichtungsabschnitt (3, 6) eine Nut darin ausgebildet hat, die in eine Richtung entgegengesetzt zu einer Fluidansaug- und Ausstoßöffnung des Zylinders (1) geöffnet ist.

5. Fluidansaug- und Ausstoßvorrichtung gemäß Anspruch 1, dadurch gekennzeichnet, daß die Dichtungsabschnitte (3, 6) ringscheibenförmig sind und einen U-Buchstaben-Querschnitt haben.

6. Fluidansaug- und Ausstoßvorrichtung gemäß Anspruch 5, dadurch gekennzeichnet, daß der U-Buchstaben-Querschnitt der Dichtungsabschnitte jeweils Nuten bildet, in dem Federn eingebettet sind.

7. Fluidansaug- und Ausstoßvorrichtung gemäß einem der Ansprüche 5 bis 6, dadurch gekennzeichnet, daß die Nuten in den Dichtungsabschnitten (3, 6) in eine Richtung entgegengesetzt zu einer Fluidansaug- und Ausstoßrichtung geöffnet sind.

8. Fluidansaug- und Ausstoßvorrichtung gemäß einem der vorhergehenden Ansprüche, dadurch gekennzeichnet, daß die Breite des Raums (8) ungefähr 20 bis 50 % des Durchmessers des Zylinders (1) beträgt.

9. Fluidansaug- und Ausstoßöffnung gemäß einem der vorhergehenden Ansprüche, dadurch gekennzeichnet, daß die Dichtungsabschnitte (3, 6) in Verbindung mit der Hin- und Herbewegung der Kolbenstange (2) aufgrund eines Stoppers (10), der an einem Führungsende der Kolbenstange (2) befestigt ist, sich hin- und herbewegen.

## Revendications

1. Dispositif d'aspiration et de refoulement de fluide dans lequel un piston (2) se déplace pour créer un état en dépression et un état sous pression dans un cylindre (1) afin d'aspirer un fluide et de refouler celui-ci, ledit piston (2) comportant au moins deux parties d'étanchéité (3, 6) en contact avec une surface intérieure du cylindre, parties d'étanchéité qui sont décalées l'une par rapport à l'autre dans une direction axiale,
caractérisé en ce que
lesdites parties d'étanchéité sont logées dans un espace commun formé dans ledit piston, d'une manière opposée, et en ce qu'un élément intercalaire (5) est interposé entre ladite première partie d'étanchéité (3) et ladite seconde partie d'étanchéité (6), ledit espace (8) renfermant de manière étanche l'un au moins de deux éléments comprenant un liquide et une substance visqueuse lubrifiante.

2. Dispositif selon la revendication 1, caractérisé en ce que
lesdites parties d'étanchéité (3, 6) dudit piston (2) renferment respectivement des ressorts hélicoïdaux (4, 4).

3. Dispositif selon la revendication 1 ou 2, caractérisé en ce que
ledit espace (8) qui est formé entre les côtés opposés desdites parties d'étanchéité (3, 6) renferme de manière étanche un lubrifiant comme substance visqueuse lubrifiante.

4. Dispositif d'aspiration et de refoulement de fluide selon la revendication 1, caractérisé en ce que chaque partie d'étanchéité (3, 6) possède, formée en elle, une gorge ouverte dans une direction opposée à un orifice d'aspiration et de refoulement de fluide dudit cylindre (1).

5. Dispositif d'aspiration et de refoulement de fluide selon la revendication 1, caractérisé en ce que lesdites parties d'étanchéité (3, 6) sont en forme de disque annulaire et ont une configuration en coupe transversale en forme de lettre U.

6. Dispositif d'aspiration et de refoulement de fluide selon la revendication 5, caractérisé en ce que ladite configuration en coupe transversale en forme de lettre U desdites parties d'étanchéité définit des gorges respectives dans lesquelles sont encastrés des ressorts.

7. Dispositif d'aspiration et de refoulement de fluide selon la revendication 5 ou 6, caractérisé en ce que lesdites gorges définies dans lesdites parties d'étanchéité (3, 6) sont ouvertes dans une direction opposée à une direction d'aspiration et de refoulement de fluide.

8. Dispositif d'aspiration et de refoulement de fluide selon l'une quelconque des revendications précédentes, caractérisé en ce que la largeur dudit espace (8) représente environ 20-50% du diamètre dudit cylindre (1).

9. Dispositif d'aspiration et de refoulement de fluide selon l'une quelconque des revendications précédentes, caractérisé en ce que lesdites parties d'étanchéité (3, 6) effectuent un mouvement de va-et-vient en conjonction avec le mouvement de va-et-vient de la tige dudit piston (2) grâce à un organe d'arrêt (10) fixé à une extrémité avant de la tige dudit piston (2).
